# DEMANDE DE BREVET EUROPEEN

(11) **EP 4 491 455 A1**
(43) Date de publication de la demande: **15.01.2025**
(21) Numéro de dépôt: 24175903.4
(22) Date de dépôt: 15.05.2024
(51) Int. Cl.: B60P 3/077, B60P 3/12, B60P 3/08

(54) **GERBEUR POUR VOITURE A TRAVERSE LIBRE DE TYPE PANIER**

(30) Priorité: 10.07.2023 FR 2307362
(71) Demandeur: Lohr Industrie, 67980 Hangenbieten (FR)
(72) Inventeur: THOMAS, Cyprien, 54700 NORROY-LES-PONT-A-MOUSSON (FR); LEBRETON, Fabien, 67120 DORLISHEIM (FR)
(74) Mandataire: Cabinet Laurent & Charras

(57) **Abrégé**

L'invention concerne un gerbeur destiné à supporter deux roues d'au moins un essieu d'une voiture et destiné à être monté sur véhicule porte-voiture, comportant deux longerons latéraux reliés mécaniquement entre eux par des éléments transversaux au voisinage d'une première et d'une deuxième zones d'extrémité de la paire de longerons, la première zone d'extrémité comportant un système d'articulation pour pivoter le gerbeur, la deuxième zone d'extrémité située au niveau d'une extrémité libre du gerbeur comportant une traverse de type panier qui relie les deux longerons, la traverse de type panier étant montée libre en coulissement sur les longerons, entre une position proximale et une position distale de première zone d'extrémité.

## Description

### Domaine technique

La présente invention se rapporte au domaine technique général des convois de transport de voitures, plus précisément des portes-voitures.

L'invention concerne notamment un gerbeur pour voiture, prévu pour être monté pivotant sur le châssis ou sur une plateforme de chargement d'un véhicule porte-voitures. Un tel gerbeur peut le cas échéant également être appelé « plateau de chargement».

Les gerbeurs permettent avantageusement d'ajuster l'assiette des voitures qu'ils supportent, afin de pouvoir imbriquer au mieux lesdits véhicules et augmenter ainsi la capacité de chargement du porte-voitures.

### Etat de la technique

Des véhicules porte-voitures comportant des plateaux de chargement sont déjà connus. On connaît donc un gerbeur destiné à supporter deux roues d'au moins un essieu d'une voiture et monté sur un véhicule porte-voiture. Le gerbeur comporte deux longerons latéraux par reliés mécaniquement entre eux par des éléments transversaux au voisinage d'au moins une première ou une deuxième zone d'extrémité de la paire de longerons.

La première zone d'extrémité est par exemple associée à un système d'articulation pour pivoter le gerbeur par rapport au véhicule selon une axe de pivotement horizontal et transversal au dit véhicule, le système d'articulation étant associé à un système d'entraînement permettant d'incliner par pivotement et de maintenir en position ledit gerbeur.

La deuxième zone d'extrémité située au niveau d'une extrémité libre du gerbeur comportant une traverse de type panier qui relie les deux longerons, cette traverse de type panier étant montée déplaçable le long des longerons, ladite traverse de type panier comportant un panier au niveau de chacune de ses extrémités latérales, ces deux paniers étant situés entre les deux longerons et chacun formés par une niche réceptrice dans laquelle les roues de l'essieu s'enfoncent et se retrouvent calées en position de transport,

La traverse de type panier peut être déplacée manuellement ou hydrauliquement et lorsqu'elle est dans la position longitudinale souhaitée sur les longerons, elle est verrouillée sur lesdits longerons.

La traverse de type panier est par exemple déplacée et verrouillée à l'aide d'un vérin hydraulique central. Ce dernier est alors équipé d'un bloc de sécurité pour maintenir en position la traverse de type panier. Cela n'est pas sans conséquence sur les coûts de fabrication d'un tel gerbeur. En outre, la position centrale du vérin hydraulique sur le gerbeur, ne permet pas de libérer complètement l'espace entre la première zone d'extrémité et la deuxième zone d'extrémité. Cet espace ne peut donc pas être occupé par une partie d'un autre véhicule en position de transport. L'imbrication des véhicules n'est donc pas optimale.

Sur une traverse de type panier manuelle à verrou à griffe, le verrouillage est réalisé à l'aide de deux organes de verrouillage situés aux extrémités de ladite traverse. Ces organes de verrouillage, par exemple des griffes de verrouillage en saillie, coopèrent mécaniquement avec des trous prévus sur les longerons. Ces griffes doivent être déplacées manuellement par l'opérateur, à l'encontre d'une force de rappel d'un ressort. Une telle opération peut s'avérer peu confortable à mettre oeuvre et dangereuse pour l'opérateur.

Un autre exemple de réalisation d'un gerbeur est par exemple décrit dans le brevet EP 3 687 856. La traverse est équipée de pignons de translation dont les dents se logent dans des trous correspondants prévus sur les longerons. Un système d'entraînement permet de synchroniser la rotation des pignons de sorte que la traverse est déplacée longitudinalement sur les longerons. Une telle solution augmente le poids du gerbeur et présente des coûts de fabrication élevés.

Lorsque le gerbeur ou gerbeur est conçu pour ne supporter qu'un seul essieu (gerbeur mono-essieu), l'opérateur est confronté à une problématique supplémentaire avec les solutions connues de l'art antérieur. En effet, le verrouillage de la traverse de panier de type panier sur le gerbeur, impose de laisser l'essieu qui reste en appui sur le châssis du véhicule, libre en translation lors d'une opération de gerbage. Durant l'inclinaison du gerbeur, l'essieu en appui sur le châssis du véhicule va avancer ou reculer, ce qui est un inconvénient majeur car la position finale de la voiture doit être anticipée avec précision. Il y a donc un risque de collision entre voitures chargées/imbriquées plus important ou au mieux une répartition non optimale des voitures dans l'espace de chargement.

En outre, pour un gerbeur comportant une traverse de type panier à griffes, si la position finale de chargement de convient pas lorsque le voiture est gerbée (inclinée), l'opérateur doit décharger la voiture pour repositionner la traverse de type panier. Cela peut augmenter substantiellement la durée nécessaire au chargement des voitures.

### Description de l'invention

L'objet de l'invention vise par conséquent à pallier les inconvénients de l'art antérieur en proposant un nouveau gerbeur comportant au moins une traverse de type panier et dont l'utilisation est facile et simplifiée.

Un autre objet de l'invention vise à fournir un gerbeur plus léger, fiable et économique.

Un autre objet de l'invention vise à fournir un gerbeur, lequel permet de simplifier les opérations de chargement/gerbage pour l'opérateur et de sécuriser lesdites opérations.

Les objets assignés à l'invention sont atteints à l'aide d'un gerbeur destiné à supporter deux roues d'au moins un essieu d'une voiture et destiné à être monté sur véhicule porte-voiture, comportant :
- deux longerons latéraux reliés mécaniquement entre eux par un élément transversal au voisinage d'une deuxième zone d'extrémité de la paire de longerons,
- une première zone d'extrémité comportant un système d'articulation pour pivoter le gerbeur par rapport au véhicule selon un axe de pivotement horizontal et transversal au dit véhicule, le système d'articulation étant associé à un système d'entraînement pour incliner par pivotement et de maintenir en position ledit gerbeur,
- la deuxième zone d'extrémité située au niveau d'une extrémité libre du gerbeur comportant une traverse de type panier qui relie les deux longerons, cette traverse de type panier pouvant occuper différentes positions longitudinales sur les longerons, ladite traverse de type panier comportant un panier au niveau de chacune de ses extrémités latérales, ces deux paniers étant situés entre les deux longerons et chacun étant formé par une niche réceptrice dans laquelle une roue de l'essieu s'engage et se retrouve calée en position de transport, caractérisé en ce que la traverse de type panier est montée libre en coulissement sur les deux longerons, de manière à pouvoir se déplacer librement entre une position proximale, proche de la première zone d'extrémité et une position distale éloignée de la première zone d'extrémité.

Selon un exemple de réalisation, le système d'entraînement comprend deux actionneurs dont chacun est articulé entre l'un des longerons et le véhicule pour modifier l'inclinaison dudit gerbeur.

Le gerbeur est par exemple destiné à être articulé sur un châssis du véhicule.

Selon un autre exemple de réalisation, le gerbeur est destiné à être articulé sur une plateforme de chargement montée fixe ou mobile sur le châssis du véhicule.

Selon un exemple de réalisation, chaque longeron comprend une première partie de longeron articulée par une extrémité sur le véhicule et une deuxième partie de longeron articulée sur la première partie par l'intermédiaire d'une liaison pivot d'axe transversal. La première partie de longeron comporte une portion d'extrémité située au-delà de la liaison pivot d'axe transversal et constitue ou comporte un appui vertical pour la deuxième partie. Avantageusement la traverse de type panier est montée sur la deuxième partie de longeron et le système d'entraînement est associé à la première partie de longeron.

Selon un exemple de réalisation, le gerbeur comporte d'une part des organes de coulissement pour réaliser un coulissement, un guidage longitudinal et un guidage latéral de la traverse de type panier sur les longerons et d'autre part des organes d'articulation pour réaliser un pivotement vers le haut de la traverse de type panier à partir d'un plan d'extension défini par les longerons. La traverse de type panier est donc une traverse libre soulevable.

Selon un exemple de réalisation, la première zone d'extrémité comprend un élément transversal sous forme d'un platelage prévu pour supporter des roues d'un deuxième essieu de la voiture, les roues du premier essieu étant calées dans les paniers de la traverse de type panier de la deuxième zone d'extrémité.

Selon un autre exemple de réalisation, la première zone d'extrémité comprend une autre traverse de type panier, fixe, prévue pour supporter les roues d'un deuxième essieu de la voiture, les roues du premier essieu étant calées dans les paniers de la traverse de type panier de la deuxième zone d'extrémité.

Selon un autre exemple de réalisation, une autre traverse de type panier est montée coulissante sur les longerons dans la première zone d'extrémité et ladite autre traverse de type panier est associée à des organes de verrouillage pour verrouiller ladite autre traverse de type panier sur les longerons lorsque la position optimale est atteinte.

Le gerbeur conforme à l'invention est avantageusement un gerbeur double-essieux ou un gerbeur mono-essieu.

Les objets assignés à l'invention sont également atteints à l'aide d'un véhicule porte-voitures comportant au moins un gerbeur tel que présenté ci-dessus.

Le gerbeur ou gerbeur conforme à l'invention, dans sa configuration mono-essieu, présente l'avantage remarquable qu'il évite lors de l'opération de gerbage de faire avancer ou reculer l'essieu en appui sur le châssis du véhicule. La position de cet essieu et par conséquent la position de la voiture correspondante est donc anticipée avec précision. L'opérateur peut ainsi serrer le frein des roues avant le gerbage et n'a donc pas à monter dans la voiture après le gerbage (voiture inclinée) pour serrer le frein.

Un autre avantage du gerbeur ou gerbeur conforme à l'invention réside dans la simplicité de sa fabrication. Le gerbeur est en effet dépourvu de tout système d'entraînement mécanique ou hydraulique complexe et coûteux. Le poids d'un tel gerbeur est par conséquent plus faible du fait de l'absence d'un système d'entraînement ou de verrouillage de la traverse.

La configuration du gerbeur conforme à l'invention permet de présenter une espace central totalement dégagé et accessible.

Un autre avantage est lié à a rapidité du positionnement de la traverse de type panier sur gerbeur conforme à l'invention. Un tel positionnement est effectué en moins d'une minute.

Le fait que la traverse libre puisse se soulever contrairement aux plateaux connus comportant un vérin central ou des griffes de verrouillage, entraine que le gerbeur n'a plus besoin d'épouser parfaitement la forme du platelage sur lequel il s'appuie. La conception de gerbeur est donc plus simple.

Avec le gerbeur conforme à l'invention, il est possible de sangler la voiture avant de démarrer le gerbage du plateau, ce qui est beaucoup plus ergonomique pour l'opérateur, notamment si la position finale est très haute.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
[Fig 1] la figure 1 est une vue schématique d'un premier exemple de réalisation d'un gerbeur conforme à l'invention, dans une position de chargement,
[Fig 2] la figure 2 est une vue schématique d'un deuxième exemple de réalisation d'un gerbeur conforme à l'invention, dans une position de chargement,
[Fig 3] la figure 3 est une vue schématique d'un troisième exemple de réalisation d'un gerbeur conforme à l'invention dans une position de chargement,
[Fig 4] la figure 4 est une illustration schématique d'un exemple de configuration d'un gerbeur conforme à l'invention,
[Fig 5] la figure 5 est une autre vue partielle, en perspective, d'un exemple de réalisation d'un gerbeur conforme à l'invention, monté sur une plateforme de chargement,
[Fig 6] la figure 6 est une vue en perspective d'une partie de la traverse de type panier d'un gerbeur conforme à l'invention,
[Fig 7] la figure 7 est une vue de dessus d'une partie de la traverse de type panier d'un gerbeur conforme à l'invention,
[Fig 8] la figure 8 est une vue de profil de l'extrémité libre d'un gerbeur conforme à l'invention, dont la traverse de type panier est pivotable vers le haut,
[Fig 9] la figure 9 est une vue est une vue de profil en coupe longitudinale, de l'extrémité libre d'un gerbeur conforme à l'invention, dont la traverse de type panier est pivotable vers le haut, et
[Fig 10] la figure 10 est une vue en coupe transversale d'un longeron illustrant en partie les organes de coulissement et de pivotement d'un gerbeur conforme à l'invention.

### Mode(s) de réalisation de l'invention

Les éléments structurellement et fonctionnellement identiques présents sur plusieurs figures distinctes, sont affectés d'une même référence numérique ou alphanumérique.

Par voiture, on entendra ici tout véhicule à quatre roues, habituellement transporté sur un véhicule porte-voitures.

Par longitudinal on se référera à une direction correspondant au sens de déplacement habituel des véhicules porte-voitures et des voitures pour leur chargement, tandis que par transversal on se référera à une direction horizontale et orthogonale à la direction longitudinale.

L'invention concerne un gerbeur destiné à supporter les deux roues d'au moins un essieu d'une voiture.

Par platelage on entend un assemblage sensiblement horizontal de tôles ou de plaques métalliques, admettant le passage des voitures 3 et habituellement conformé avec des perforations.

Par traverse de type panier on entend une pièce transversale prévue pour recevoir chacune des deux roues d'un même essieu ou train de roues d'une voiture dans un panier, chacun de ces deux paniers étant formés par une niche réceptrice dans laquelle les roues s'enfoncent partiellement et se retrouvent calées en position de transport.

La traverse de type panier comporte un panier au niveau de chacune de ses extrémités latérales, ces deux paniers étant situés entre les deux longerons et reliées par un élément transversal.

La niche réceptrice de chaque panier peut être formée par un évidement conformé dans la traverse de type panier, le panier étant alors à fond ouvert, ou par une déformation concave conformée vers le bas dans la traverse de type panier, le panier étant alors à fond fermé. Chaque panier présente préférentiellement une largeur (transversale) supérieure à la largeur d'une roue afin de pouvoir s'adapter aux dimensions de tout type de voiture à porter sur le gerbeur.

Chaque panier présente également préférentiellement une longueur (longitudinale) inférieure au diamètre minimal habituel d'une roue afin que les roues d'une voiture portée sur le gerbeur ne puissent pas passer entièrement au travers des paniers mais soient retenues par les rebords longitudinaux de chaque panier.

Chaque panier est préférentiellement sous la forme de deux appui-roues transversaux reliés entre eux par deux rebords longitudinaux parallèles aux longerons. Chaque panier est préférentiellement de forme trapézoïdale, le côté le plus court de chaque trapèze étant dirigé vers l'intérieur du gerbeur. En effet, les petites voitures sont généralement à voie étroite et avec des petites roues. La forme en trapèze est aussi favorable pour améliorer l'encastrement d'un pare-brise généralement bombé.

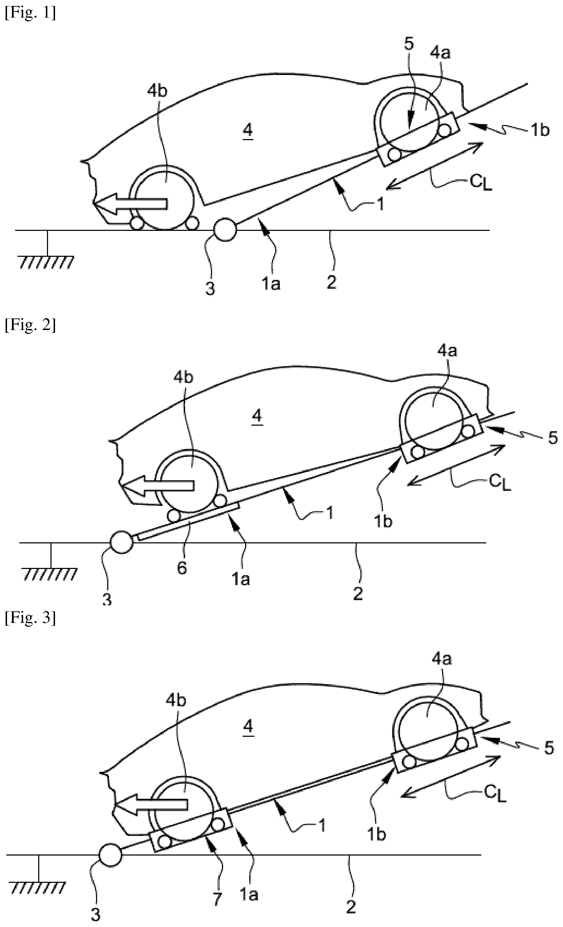

La figure 1 est une vue schématique d'un premier exemple de réalisation d'un gerbeur 1 mono-essieu conforme à l'invention, dans une position de chargement pivotée vers le haut à partir dune plateforme 2 de chargement.

Le gerbeur 1 présente une première zone d'extrémité 1a comportant un élément transversal de rigidification, par exemple une traverse rigide, du gerbeur 1. Le gerbeur 1 est associé à un système d'articulation 3 pour pivoter le gerbeur 1 par rapport au véhicule selon une axe de pivotement horizontal et transversal au dit véhicule. Le système d'articulation est par exemple intégré à la plateforme 2 ou à un châssis du véhicule.

Le système d'articulation 3 est associé à un système d'entraînement non représenté pour incliner par pivotement, par exemple vers le haut et pour maintenir en position ledit gerbeur 1. Ce dernier supporte par exemple l'essieu avant d'une voiture 4.

Le gerbeur 1 présente une deuxième zone d'extrémité 1b située au niveau d'une extrémité libre dudit gerbeur 1. La deuxième zone d'extrémité 1b comporte une traverse de type panier 5 qui relie les deux longerons. Cette traverse de type panier 5 pouvant occuper différentes positions longitudinales sur les longerons.

La traverse de type panier 5 comporte avantageusement un panier au niveau de chacune de ses extrémités latérales, ces deux paniers étant situés entre les deux longerons et chacun desdits paniers est formé par une niche réceptrice dans laquelle une roue 4a de l'essieu s'engage et se retrouve calée en position de transport.

La traverse de type panier 5 est montée libre en coulissement sur les deux longerons, de manière à pouvoir se déplacer librement entre une position proximale, proche de la première zone d'extrémité 1a et une position distale éloignée de première zone d'extrémité 1a. la traverse de type panier 5 présente donc une course de coulissement libre C_{L} au niveau de la deuxième zone d'extrémité 1b. La traverse de type panier 5 n'est donc pas verrouillée en position et ce même pendant les phases de roulage.

La figure 2 est une vue schématique d'un deuxième exemple de réalisation du gerbeur 1, dans une position de chargement. Dans cet exemple de réalisation, le gerbeur 1 constitue un gerbeur double-essieu et l'élément transversal de la première zone d'extrémité 1a comprend un platelage 6 pour supporter les roues 4b d'un deuxième essieu de la voiture 4. Les roues 4a du premier essieu sont calées dans les paniers de la traverse de type panier 5 de la deuxième zone d'extrémité 1b.

La figure 3 est une vue schématique d'un troisième exemple de réalisation du gerbeur 1, dans une position de chargement. Dans cet exemple de réalisation, le gerbeur 1 constitue un gerbeur double-essieu et l'élément transversal de la première zone d'extrémité 1a comprend une autre traverse de type panier 7 prévue pour supporter les roues 4b du deuxième essieu de la voiture 4. Les roues 4a du premier essieu sont aussi calées dans les paniers de la traverse de type panier 5 de la deuxième zone d'extrémité 1b.

L'autre traverse de typa panier 7 est avantageusement montée coulissante sur les longerons du gerbeur 1, dans la première zone d'extrémité 1a. En outre, l'autre traverse de type panier 7 est associée à des organes de verrouillage pour verrouiller ladite autre traverse de type panier 7 sur les longerons lorsque la position optimale et/ou souhaitée de la voiture 4 est atteinte.

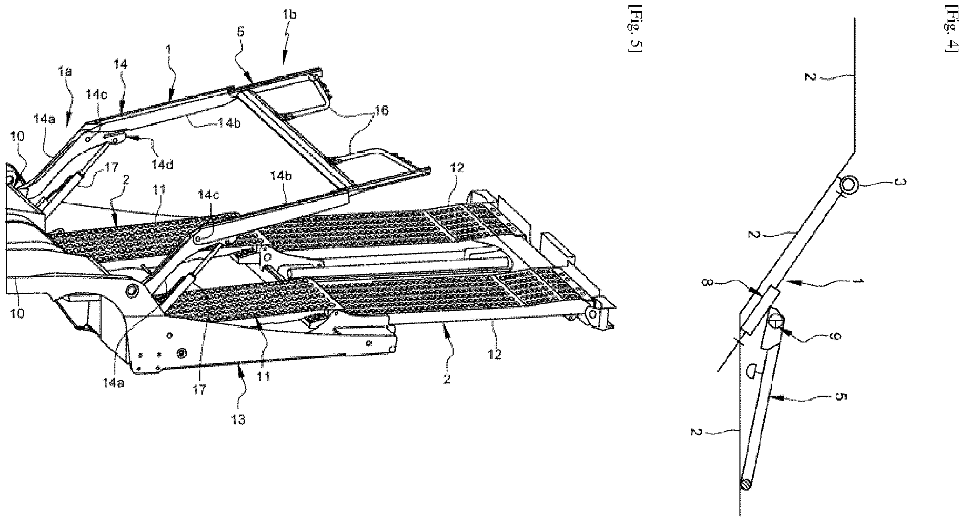

La figure 4 est une illustration schématique et cinématique d'un exemple de configuration d'un gerbeur 1 mono-essieu. La plateforme 2 présente par exemple une configuration en trois parties, dont une partie inclinée reliant entre elles deux parties sensiblement horizontales.

Le système d'articulation 3 permet au gerbeur 1 de pivoter vers le bas tandis que la traverse de type panier 5 pivote vers le haut lorsque l'extrémité libre de ladite traverse de type panier 5 prend appui sur la plateforme. Le gerbeur 1 peut ainsi s'étendre suivant une direction de la partie inclinée de la plateforme 2.

Le gerbeur 1 comporte avantageusement des organes de coulissement 8 et des organes d'articulation 9.

Les organes de coulissement 8 sont conçus pour réaliser un guidage longitudinal et un guidage latéral de la traverse de type panier 5 lorsqu'elle coulisse sur les longerons.

Les organes d'articulation 9 sont conçus pour permettre un pivotement vers le haut de la traverse de type panier 5 à partir d'un plan d'extension défini par les longerons.

La figure 5 est une autre vue partielle, en perspective, d'un exemple de réalisation d'un gerbeur 1 mono-essieu monté sur une plateforme 2 de chargement. La plateforme 2 est par exemple constituée de platelages 10, 11 et 12 successifs, montés fixes ou mobiles sur un châssis 13 d'un véhicule.

Le gerbeur 1 comporte deux longerons 14 reliés mécaniquement entre eux par un élément transversal au moins dans la deuxième zone s'extrémité 1b. Cet élément transversal est constitué par la traverse de type panier 5 lequel comporte, de manière connue, deux paniers 16 destinés à recevoir et à caler les roues 4a du premier essieu de la voiture 4.

Les longerons 14 sont articulés directement sur chaque côté latéral du châssis 13 au niveau de la première zone d'extrémité 1a, grâce au système d'articulation 3. Les longerons 14 présentent avantageusement une forme coudée ou droite en fonction de la configuration de la plateforme 2. Le gerbeur 1 est donc dépourvu de tout élément transversal au niveau de la première extrémité 1a, libérant ainsi tout l'espace central et contribuant à la diminution du poids dudit gerbeur 1.

Le système d'articulation 3 est associé à un système d'entraînement, par exemple hydraulique, pour incliner par pivotement et pour maintenir en position le gerbeur chargé ou non. Le système d'entraînement comprend avantageusement deux actionneurs 17 hydrauliques, pneumatiques ou électriques, dont chacun est articulé entre l'un des longerons 14 et le châssis 13 du véhicule pour modifier l'inclinaison du gerbeur 1.

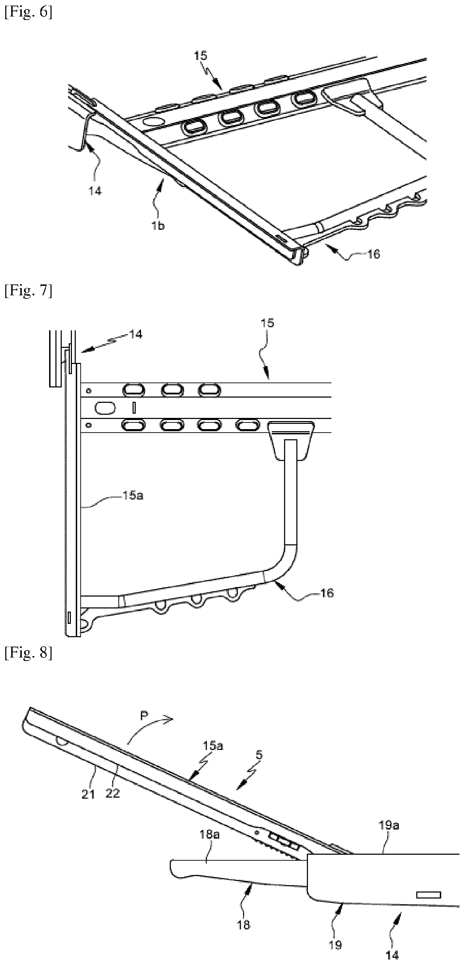

La figure 6 est une vue en perspective d'une partie de la traverse de type panier 5 du gerbeur et la figure 7 est une vue de dessus d'une partie de la traverse de type panier 5.

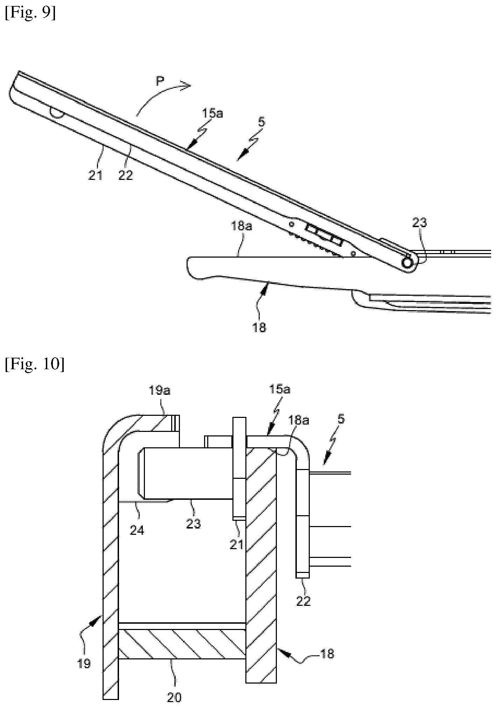

La figure 8 est une vue de profil de l'extrémité libre d'un exemple de réalisation du gerbeur 1, dont la traverse de type panier 5 est pivotable vers le haut et la figure 9 est une vue de profil en coupe longitudinale, de l'extrémité libre du gerbeur 1.

En complément, la figure 10 est une vue en coupe transversale d'un longeron 14 illustrant en partie les organes de coulissement 8 et les organes de de pivotement 9 du gerbeur 1.

Les longerons 14 sont avantageusement des structures mécano-soudées de tôles de différentes dimensions et formes. Chaque longeron 14 comporte un assemblage rigide d'une paroi intérieure 18 dont le chant supérieur 18a est libre et dune paroi extérieure 19. La paroi intérieure 18 est plus longue et que la paroi extérieure 19. Cette dernière présente une extrémité supérieur courbe 19a repliée vers la paroi intérieure 18 de manière à recouvrir partiellement l'espace libre 14a localisé entre les parois intérieure 18 et extérieure 19.

Des éléments de liaison 20 permettent de relier par soudage les parois intérieure 18 et extérieure 19.

La traverse de type panier 5 présente de chaque côté latéral un profilé 15a en forme de U renversé lequel vient coiffer le chant supérieur 18a de la paroi intérieure 18. Le profilé 15a repose donc sur le chant supérieur 18a, lequel réalise la zone d'appui vertical sur le longeron 14. Le profilé en U renversé présente donc deux branches 21 et 22 du U renversé, lesquelles se positionnent de part et d'autre de la paroi intérieure 18 lorsque le profilé 15a repose sur le chant supérieur 18a. Le profilé 15a en U renversé, coiffant la partie supérieure de la paroi intérieure 18 permet ainsi d'assurer le guidage en coulissement et le guidage latéral de la traverse de type panier 5 sur les longerons 14. Le profilé 15a et la paroi intérieure du longeron 14 réalisent ainsi les organes de coulissement 8.

La branche 21 du profilé 15a, laquelle est localisée entre les parois intérieure 18 et extérieure 19, est pourvue d'un organe de retenue 23, par exemple un round soudé, lequel s'étend transversalement en direction de la paroi extérieure 19. L'organe de retenue 23 s'étend dans l'espace libre 14a et sous l'extrémité supérieure recourbée 19a. L'organe de retenue 23 est ainsi retenu verticalement par le longeron 14, ce qui empêche un éventuel dégagement vertical de la traverse de type panier 5 du longeron 14.

L'organe de retenue 23, par sa position spécifique, c'est-à-dire à l'une des extrémités de la traverse de type panier 5, permet d'assurer le pivotement vers le haut, selon la flèche P, de la traverse de type panier 5.

La zone d'appui en position non pivotée de la traverse de type panier 5 est le chant supérieur 18a, soit la surface de contact (18a, fig. 10) entre les tôles du longeron 14 et de la traverse de type panier 5. En position pivoté, vers le haut, la zone d'appui devient l'extrémité de cette surface de contact, plus précisément l'arête ou l'extrémité du profilé 15a. Cette arrête constitue ainsi l'axe de pivotement et l'organe de retenue 23 pivote autour de cet axe lorsque la traverse de type panier se soulève.

La position de l'organe de retenue 23 sur la branche 22, plus avancée au minimum par rapport à l'axe de pivotement constitué par l'extrémité du profilé 15a en appui sur le chant 18a, permet le pivotement de la traverse de type panier 5, tout en maintenant la fonction de retenue vers de haut de ladite traverse de type panier 5. Ceci dans le but de garantir que la traverse de type panier ne se désengage pas des longerons 14.

Les longerons 14 comportent en outre une butée de sécurité 24 pour délimite la position longitudinale extrême de la traverse de type panier 5 sur les dits longerons 14. Les butées de sécurité 24 empêchent un dégagement longitudinal de la traverse de type panier 5 des longerons 14.

A titre d'exemple, le gerbeur 1 mono-essieu présente par ailleurs un avantage substantiel dans la mesure où il permet de simplifier le processus de chargement/déchargement. En effet, l'opérateur positionne la traverse de type panier 5 sur les longerons 14, charge la voiture 4, serre le frein à main de la voiture 4, procède au gerbage de la voiture 4 avec le frein à main serré, cale et sangle l'essieu reposant sur la plateforme 2 puis sangle l'essieu reposant sur la traverse de type panier 5.

Contrairement à un processus connu dans l'art antérieur, l'opérateur n'a pas à verrouiller la traverse de type panier 5 sur les longerons 14. En outre, le fait de pouvoir serrer le frein de la voiture 4 avant son gerbage, évite à l'opérateur de devoir remonter dans la voiture 4 une fois gerbée pour serrer ledit frein. Une telle opération est souvent compliquée voire dangereuse en raison de la hauteur et de l'inclinaison de la voiture 4 gerbée.

Selon un exemple de réalisation, illustré notamment à la figure 10, chaque longeron 14 comprend une première partie 14a articulée par une extrémité sur le véhicule ou sur la plateforme 2 et une deuxième partie 14b articulée sur ladite première partie 14a. Cette articulation est réalisée par l'intermédiaire d'une liaison pivot d'axe transversal 14c.

La première partie 14a comporte une portion d'extrémité 14d, située au-delà de la liaison pivot d'axe transversal 14c. Cette portion d'extrémité 14d constitue ou comporte un appui vertical pour la deuxième partie 14b. La deuxième partie 14b est maintenue en position par rapport à la première partie 14a en reposant sur cette portion d'extrémité 14d lorsque le gerbeur 1 est pivoté vers haut. La deuxième zone d'extrémité 1b se situe vers les extrémités libres des deuxièmes parties 14b.

L'actionneur 17 est avantageusement articulé d'une part sur la plateforme 2 et d'autre part sur la première partie 14a pour déplacer par pivotement la première partie 14a en entraînant dans son mouvement la deuxième partie 14b. Lorsque l'actionneur 17 ramène la première partie 14a vers le bas sur la plateforme 2, la deuxième partie 14b prend appui sur la plateforme 2 et peut se soulever de l'appui vertical de la portion d'extrémité 14d. Le gerbeur 1 peut ainsi s'adapter au mieux à la configuration de la plateforme 2.

Il est évident que la présente description ne se limite pas aux exemples explicitement décrits, mais comprend également d'autres modes de réalisation. Ainsi, une caractéristique technique décrite pourrait être remplacée par une caractéristique technique équivalente, sans sortir du cadre de la présente invention tel que défini par les revendications.

## Revendications

1. Gerbeur (1) destiné à supporter deux roues (4a) d'au moins un essieu d'une voiture (4) et destiné à être monté sur véhicule porte-voiture, comportant :
- deux longerons (14) latéraux reliés mécaniquement entre eux par un élément transversal au moins au voisinage d'une deuxième zone d'extrémité (1b) de la paire de longerons (14),
- une première zone d'extrémité (1a) comportant un système d'articulation (3) pour pivoter le gerbeur (1) par rapport au véhicule selon une axe de pivotement horizontal et transversal au dit véhicule, le système d'articulation (3) étant associé à un système d'entraînement pour incliner par pivotement et de maintenir en position ledit gerbeur (1),
- la deuxième zone d'extrémité (1b) située au niveau d'une extrémité libre du gerbeur (1) comportant une traverse de type panier (5) qui relie les deux longerons (14), cette traverse de type panier (5) pouvant occuper différentes positions longitudinales sur les longerons (14), ladite traverse de type panier (5) comportant un panier (16) au niveau de chacune de ses extrémités latérales, ces deux paniers (16) étant situés entre les deux longerons (14) et chacun étant formé par une niche réceptrice dans laquelle une roue (4a) de l'essieu s'engage et se retrouve calée en position de transport, **caractérisé en ce que** la traverse de type panier (5) est montée libre en coulissement sur les deux longerons (14), de manière à pouvoir se déplacer librement entre une position proximale, proche de la première zone d'extrémité (1a) et une position distale éloignée de première zone d'extrémité (1a).

2. Gerbeur (1) selon la revendication 1, **caractérisé en ce que** le système d'entraînement comprend deux actionneurs (17) dont chacun est articulé entre l'un des longerons (14) et le véhicule pour modifier l'inclinaison dudit gerbeur (1).

3. Gerbeur (1) selon la revendication 1 ou 2 **caractérisé en ce que** chaque longeron (14) comprend une première partie (14a) articulée par une extrémité sur le véhicule et une deuxième partie (14b) articulée sur la première partie (14a) par l'intermédiaire d'une liaison pivot d'axe transversal (14c), la première partie (14a) comportant une portion d'extrémité (14d) située au-delà de la liaison pivot d'axe transversal (14c) et constituant ou comportant un appui vertical pour la deuxième partie (14b), la traverse de type panier (5) étant montée sur la deuxième partie (14b) et le système d'entraînement étant associé à la première partie (14a).

4. Gerbeur (1) selon l'une quelconque des revendications 1 à 3, **caractérisé en ce qu'**il est destiné à être articulé sur un châssis (13) du véhicule.

5. Gerbeur (1) selon l'une quelconque des revendications 1 à 3, **caractérisé en ce qu'**il est destiné à être articulé sur une plateforme (2) de chargement, montée fixe ou mobile sur le châssis (13) du véhicule.

6. Gerbeur (1) selon l'une quelconque des revendications 1 à 5, **caractérisé en ce qu'**il comporte des organes de coulissement (8) pour réaliser un guidage longitudinal et un guidage latéral de la traverse de type panier (5) sur les longerons (14).

7. Gerbeur (1) selon l'une quelconque des revendications 1 à 6, **caractérisé en ce qu'**il comporte des organes d'articulation (9) pour réaliser un pivotement vers le haut de la traverse de type panier (5) à partir d'un plan d'extension défini par les longerons (14).

8. Gerbeur (1) selon l'une quelconque des revendications 1 à 7, **caractérisé en ce que** la première zone d'extrémité (1a) comprend un élément transversal sous forme d'un platelage prévu pour supporter des roues (4b) d'un deuxième essieu de la voiture (4), les roues (4a) du premier essieu étant calées dans les paniers (16) de la traverse de type panier (5) de la deuxième zone d'extrémité (1b).

9. Gerbeur (1) selon l'une quelconque des revendications 1 à 7, **caractérisé en ce que** la première zone d'extrémité (1a) comprend une autre traverse de type panier (7), fixe, prévue pour supporter des roues (4a) d'un deuxième essieu de la voiture (4), les roues (4a) du premier essieu étant calées dans les paniers (16) de la traverse de type panier (5) de la deuxième zone d'extrémité (1b).

10. Gerbeur (1) selon l'une quelconque des revendications 1 à 7, **caractérisé en ce qu'**une autre traverse de type panier (7) est montée coulissante sur les longerons (14) dans la première zone d'extrémité (1a), ladite autre traverse de type panier (7) étant associée à des organes de verrouillage pour verrouiller ladite autre traverse de type panier (7) sur les longerons (14) lorsque la position optimale est atteinte.

11. Gerbeur (1) selon l'une quelconque des revendications 8 à 10, **caractérisé en ce qu'**il constitue un gerbeur double-essieux.

12. Gerbeur (1) selon l'une quelconque des revendications 1 à 7, **caractérisé en ce qu'**il constitue un gerbeur mono-essieu.

13. Véhicule porte-voitures comportant au moins un gerbeur (1) conforme à l'une quelconque des revendications 1 à 12.
